# EUROPEAN PATENT APPLICATION

(11) **EP 1 684 509 A2**
(43) Date of publication of application: **26.07.2006**
(21) Application number: 05255781.6
(22) Date of filing: 19.09.2005
(51) Int. Cl.: H04N 5/445

(54) **Portable display**

(30) Priority: 19.01.2005 CN 200520001177
(71) Applicant: Inventec Multimedia & Telecom Corporation, Neihu District Taipei City (TW)
(72) Inventor: Weng, Shih-Hsiung, Taipei City (TW); Leow, Ming-Cheang, 11900 Bayan Lepas, Penang (MY)
(74) Representative: Shackleton, Nicola

(57) **Abstract**

A portable display, which is easy to be taken with and can connect to various electronic devices for processing image data, includes a display device and a rotating connectible base, wherein the display device converts a digital image data into an image and presents it, and a connecting base is disposed on the side of the display device, while the rotating connectible base is placed in the connecting base, such that the display device rotates coaxially at any angle, and can be connected through a connection to an electronic device having the same specification as the connection, and converts the image data into a visible information and presents it onto the display.

## Description

### BACKGROUND OF THE INVENTION

### Field of Invention

The present invention relates to a portable display, connected to an electronic device for processing image data, particularly to a portable display with a connection, which is portable, and may be connected to an electronic device directly.

### Related Art

Displays are widely used currently, from a monochrome in early days to a full color nowadays, and the progress and application of the displays are greatly related with the human life. Also, as science and technology develops, the conventional displays based on cathode ray tube (CRT) have been gradually replaced by the Liquid Crystal Displays (LCDs) with the characteristics of ultra-thin volume and low radiation. However, it can be seen from the wide use of the Liquid Crystal Display in personal computers (PCs), digital cameras, and digital video cameras that due to its small volume, it is the best choice for using with a portable electronic device. The application of the digital camera is a revolutionary change to those who often take pictures. After a user takes a picture though the digital camera, the image is stored in the memory of the digital camera in the form of a digital data, and these photos in the digital form can be stored in the storage hardware, such as a hard disk, a memory card or a magnetic disk, though a transmission device. Further, it is very convenient for the user to compile these digital photos with specific software by himself/herself, and a high level digital camera even may provide a compliment, e.g., a light compensation, immediately after shooting. Such a digital camera has an advantage of high pixels, and is provided with a Liquid Crystal Display, which enables the user to preview the image to be picked before shooting, and view the resultant image immediately after shooting. This function helps the photo taker to obtain a best effect when shooting.

However, not all the digital cameras are provided with Liquid Crystal Display. As the digital camera prevails, many digital cameras at a low price are promoted, which cover the basic shooting functions of the digital camera, but without a Liquid Crystal Display, thus, although the user may take digital pictures with this camera, they can not see the pictures during shooting as the users of the high level camera can do.

Furthermore, the current high level digital camera can be equipped with other peripherals, such as a long lens, a wide angle lens, a filter lens and so on, to make a better shooting effect. For those professional photographers who often take pictures, the Liquid Crystal Display may not be that important when shooting, or even may be a burden to be taken with, however, when the shooting is completed, it would be rather convenient if the pictures could be processed once together. Therefore, balancing between these two factors, if the Liquid Crystal Display could be equipped as an attachment, it will do much more convenience for the user.

The related art is listed hereinafter. A data display with a book style is disclosed in ROC patent No. 442746, which assists the user to operate a book-like portable computer conveniently. The data display is formed with a book style, and used as a portable computer, which includes a protective sleeve that can be open and closed, on one side of which is installed and fixed a film display unit, and on the other side is installed and fixed a body; when being folded, the body inversely overlaps the film display unit installed and fixed on one side of the protective sleeve.

A digital image storage player is disclosed in ROC patent No. 525881, which includes an output unit, a storage unit, an operation unit, an interface unit, and a control unit, wherein the storage unit mainly comprises a hard disk; the operation unit has functional keys such as store, play, edit, and browse, etc., and when the functional keys are performed the corresponding instruction thereof is produced; the interface unit can be interposed with one or more different memory cards; the control unit is connected to each of the above-mentioned units respectively, to receive the instructions output by the operation unit to perform the control actions such as store, play, edit, or browse, etc., and transmit them to the output unit, thereby playing the still or dynamic image data.

A multi-display notebook is disclosed in ROC patent No. 526976, which mainly has a configuration of a notebook body and an externally connected display; characterized in that: in addition to a CRT port on the notebook body, a further digital display interface port is added, which not only outputs a video signal for the display, but also provides a desired power for the display, such that when an externally connected display is needed by the notebook, such as a set of second LCD externally connected, the digital display interface port and the externally connected display of the notebook of the present invention is easily connected with a cable line, so that the notebook has several displays simultaneously and thereby achieving the effect of synchronously using multiple monitors.

A portable display claimed by the present applicant is disclosed in ROC patent No. 568482, in which a portable display which is easy to be taken with and can connect to a various electronic devices for processing image data is provided, which includes a display monitor and a connection for connecting the portable display to an electronic device with the same specification connection, and converts the image data into visible information and presents it onto the display. Although the application discloses a portable display which can be rotated at any angle after being connected to the electronic device, the mechanism that how the rotation at any angle can be achieved in practice is not disclosed.

### SUMMARY OF THE INVENTION

In view of the above-mentioned problem, a major object of the present invention is to provide a portable display, by providing an electronic device without a display or an electronic device with a display monitor to be enlarged, which is capable of connecting the portable display of the present invention, thereby the video signal of the electronic device is present though the portable display.

Accordingly, to achieve the above object, the present invention discloses a portable display for linking with an electronic device that is used to process an image data and delivering data, including:

A display device for converting a digital image data into an image and presenting it, on the side of which is disposed with a connecting base; and a rotating connectible base is placed in this connecting base, such that the display device rotates coaxially at any angle, and the rotating connectible base comprises:
a connection for data delivering and linking between the display device and the electronic device; and a rotation stopper connected to the connection, which slides in the connecting base and provides a radical force against the connecting base, wherein the rotation stopper comprises more than one elastic element and a holder, the holder passing through the connection, and the elastic elements being placed in the accommodating space between the holder and the connection, and part of the elastic elements are projected from the holder via an orifice in the holder and passing through it.

Further, an aperture is set on one end of the holder, and a slot is disposed within the holder, wherein the slot is connected to the edge of the aperture, while the aperture matches the shape of the connection.

In order to rotate the rotating connectible base at a position of a specific angle, more than one groove is disposed on one end of the connecting base, thereby the rotating connectible base is stopped against the grooves when rotating, therefore, the arrangement of the grooves is designed depending on the specific position. Additionally, there is a pivot cover, which passes through the connection and connects to the connecting base.

The characteristics and practices associated with the present invention are illustrated in combination with the drawings by way of the most preferred embodiment in detail as follows.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below for illustration only, and thus are not limitative of the present invention, and wherein:
FIG. 1 is a structure view of the present invention;
FIG. 2 is an explosive view of the present invention;
FIG. 3 is an assembled view of the rotating connectible base of the present invention;
FIG. 4 is a partial exploded view of the present invention;
FIG. 5 is a schematic view of assembly manner of the present invention;
FIG. 6 is schematic view of actuating the present invention; and
FIG. 7 is an exploded view of another application embodiment of the present invention.

### DETAILED DESCRIPTION OF THE INVENTION

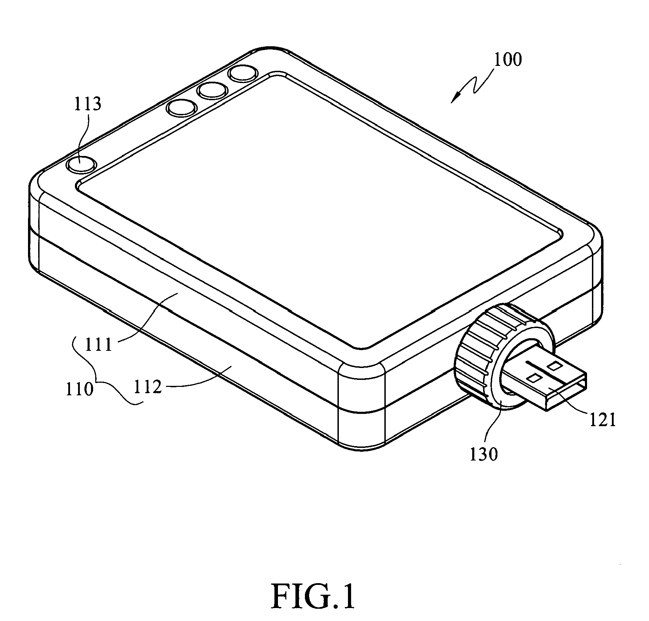

Referring to Fig. 1, a portable display 100 of the present invention is shown, which is mainly composed of a display device 110 and a rotating connectible base 120, wherein the display device 110 is a Liquid Crystal Display (LCD) primarily for displaying an image data; the rotating connectible base 120 is disposed at the peripheral of the portable display 100, which may be rotated by 360 degrees uniaxially, and the rotating connectible base 120 is suitable for an Universal Serial Bus (USB) interface, an IEEE1394 interface, a Digital Video Interface (DVI), a Video Graphics Array (VGA), a Super Video Graphics Array (SVGA), an Extended Video Graphics Array(XVGA), and an S-video interface and so on; and further, a set of functional keys 113 is disposed around adjacent to the display device 110 so as to control such devices as a light source, and brightness.

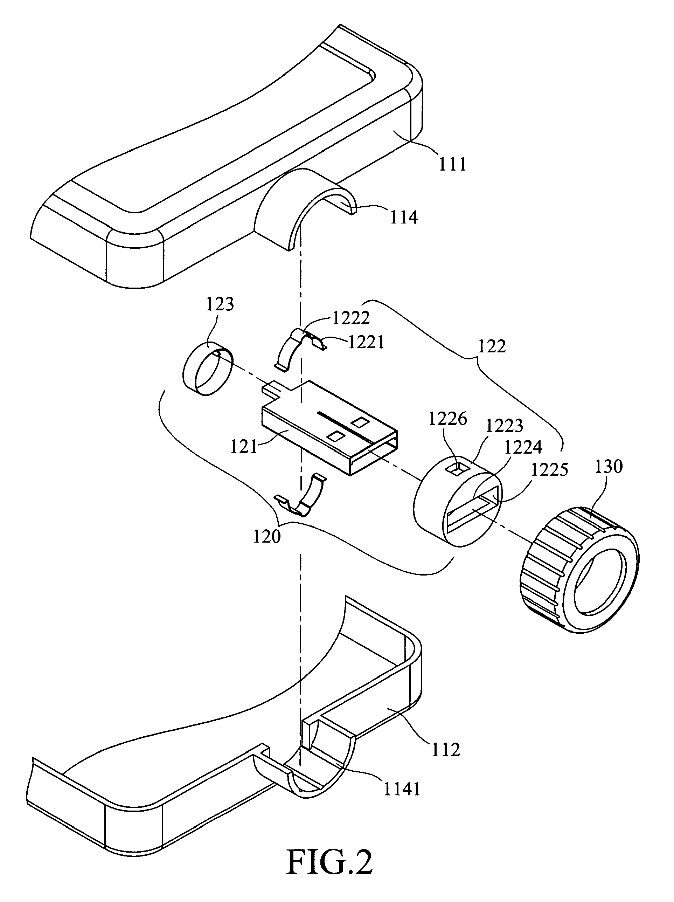

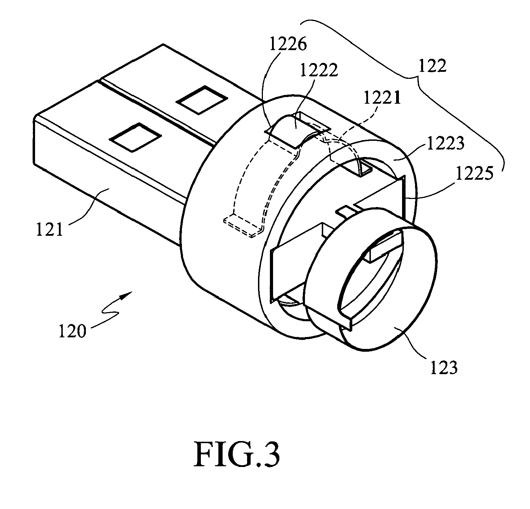

Referring to Fig. 2 and Fig. 3, an explosive view of the present invention and an assembled view of the rotating connectible base 120 are shown, in which the display device 110 is a Liquid Crystal Display, with only its outer structures, i.e., an upper cover 111 and a lower cover 112, shown in the figures, since the inner structures are already known nowadays, which will not be described any more herein. And a connecting base 114 is disposed on one side of the display device 110, while the rotating connectible base 120 is placed in the connecting base 114, such that the display device 110 can be rotated at any angle coaxially, and a rotation stopper 122 provides a radial force against the connecting base 114, such that the rotation stopper 122 can hold its position when being not impelled by the external force.

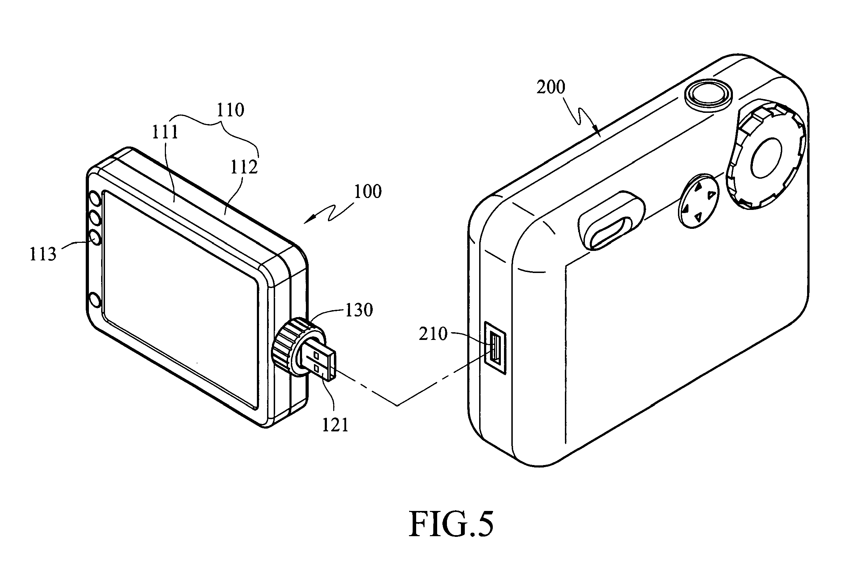

The rotating connectible base 120 comprises a connection 121 and a rotation stopper 122. The connection 121 is mounted to the rotating connectible base 120, and can be rotated coaxially at any angle along with the rotating connectible base 120. The connection 121 is suitable for an Universal Serial Bus (USB) interface, an IEEE1394 interface, a Digital Video Interface (DVI), a Video Graphics Array (VGA), a Super Video Graphics Array (SVGA), an Extended Video Graphics Array (XVGA), and an S-video interface and so on, for data delivering and linking between the display device 110 and an electronic device 200 , as shown in Fig. 5. And the other end of the connection 121 is connected to a Flexible Print Circuit Board 123, which is a flexible Copper foil substrate with the desired lines finally remained after processed, for example, by etching and so on, as a media for transmitting the signal of the electronic products. Generally a Flexible Print Circuit Board is mainly used to carry an electronic part, such as elements of integrated circuit chip, resistor, capacitor, connector etc., such that the electronic products are capable of playing the established functions. Since the Flexible Print Circuit Board has the properties such as flexibility and three-dimensional wiring, the present invention uses such Flexible Print Circuit Board 123 to connect with the display device 110, and transmits the signal delivered to connection 121 via the Flexible Print Circuit Board 123 to the display device 110.

The rotation stopper 122 comprises more than one elastic element 1221 and a holder 1223. The elastic element 1221 is a sheet-like elastic slice, and a aperture 1224 is set on one end of the holder 1223, and a slot 1225 within the holder 1223, wherein the slot 1225 is connected to the edge of the aperture 1224, and the aperture 1224 matches the shape of the connection 121, so that the holder 1223 passes through the connection 121 and the side of the connection 121 is inserted into the slot 1225, thereby the connection 121 is associated with the holder 1223. In addition, more than one orifice 1226 is set on the circumference of the holder 1223, and the above mentioned elastic element 1221 is placed in the accommodating space between the holder 1223 and the connection 121, and part of the elastic element is projected from the aperture 1224 of the holder 1223, thus forming the projection 1222, as shown in Fig. 3.

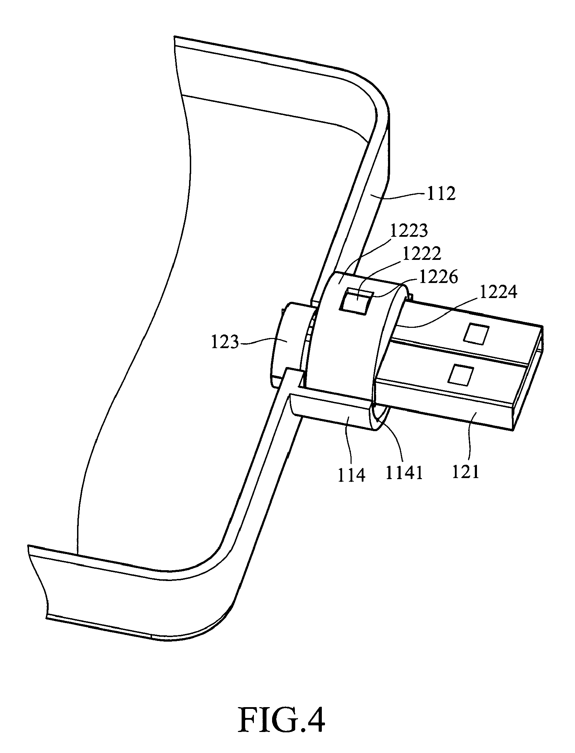

Referring to Fig. 4, a partial exploded view of the present invention is shown, wherein more than one groove 1141 is set on one end of the connecting base 114. The projection 1222 of the elastic element 1221 is stopped by being embedded into the grooves 1141 when the rotation stopper 122 is rotating, and when the display device 110 or the rotating connection 121 is rotated by an external force, due to the projection 1222 is a portion of the elastic element 1221, the projection 1222 has an elasticity. Therefore, when the rotation stopper 122 is placed in the connecting base 144, the outer diameter of the holder 1223 is approximately equal to the inner diameter of the connecting base 114, thus the projection 122 will be compressed and produce an radial force to the connecting base 144, such that the rotating connectible base 120 is stopped by the radial force, and the grooves 1141 are set on the connecting base 114, such that this projection 1222 rests against to the grooves 1441, thereby having a rotating position at a fixed angle. Therefore, the arrangement of the grooves 1141 is designed depending on the specific position, hence, the display device 110 of the present invention can be rotated at any angle within 360 degrees, and can be rotated at a specific position angle.

Referring back to Fig. 2, in addition, a pivot cover 130 passes through the connection 121 and is connected to the connecting base 114 e.g., by thread connection, tight fitting connection and so on. The pivot cover 130 is used to hold the connecting base 114, thereby fastening the upper cover 111 and the lower cover 112 of the display device 110.

Referring to Fig. 5, the linkage of the present invention and the electronic device 200 without a display device is shown, the electronic device 200 being a digital camera or a digital video camera, etc. Generally the electronic device 200 is disposed with a data transmission port 210 corresponding to the interface of the connection 121, for the user to transmit the signal of the electronic device 200 into a computer or other processing apparatuses, while the connection 121 of the portable display 100 of the present invention may be interposed with the data transmission port 210, wherein the currently optimal transmission specification is the Universal Serial Bus (USB), but the followings are also acceptable such as an IEEE1394 interface, a Digital Video Interface(DVI), a Video Graphics Array(VGA), a Super Video Graphics Array(SVGA), an Extended Video Graphics Array(XVGA), and an S-video interface and so on.

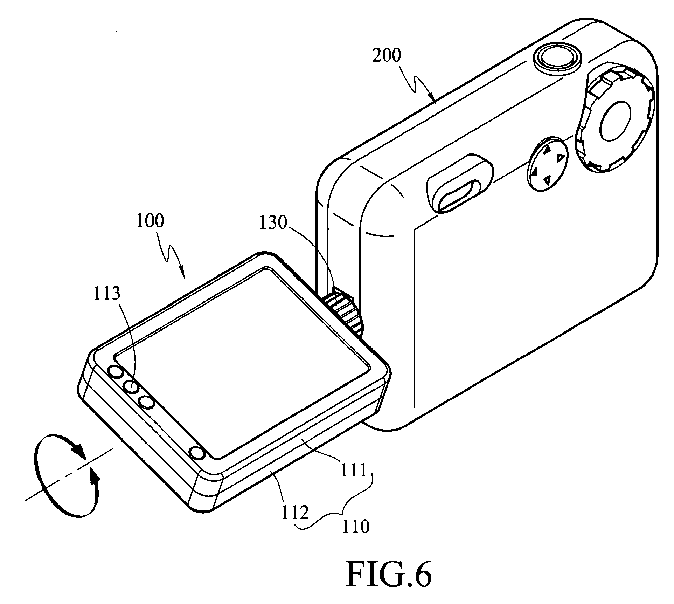

Referring to Fig. 6, after the portable display 100 of the present invention is linked with the electronic device 200, the digital pictures taken by the electronic device 200, such as a digital camera 200, can be transmitted to the display device 110 of the portable display 100 through the connection 121, so that the user can view the images immediately, or those viewing image to be taken before shooting, and the user can adjust the display device 110 depending on the visual angle to obtain an appropriate angle for viewing.

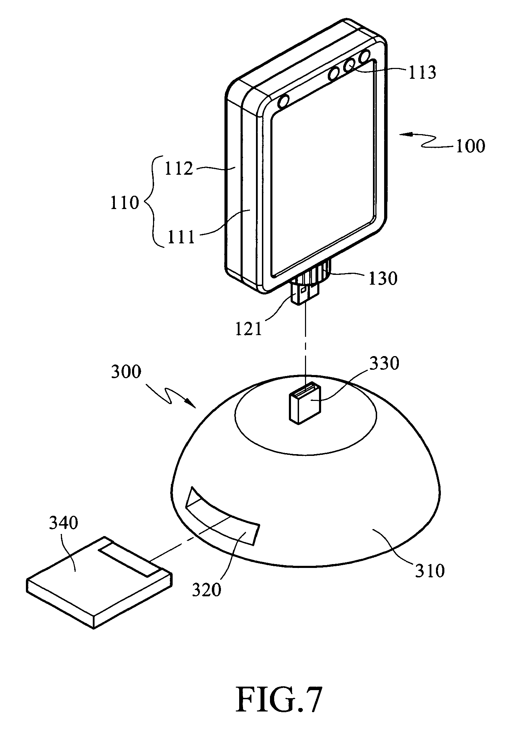

Referring to Fig. 7, another application embodiment of the present invention is shown. An electronic data reading device 300 comprises a base body 310, the base body 310 being disposed with a data reading interface device 320 and a data transmission port 330. The specification of this data transmission port 330 can be an Universal Serial Bus (USB), an IEEE1394 interface, a Digital Video Interface (DVI), a Video Graphics Array (VGA), a Super Video Graphics Array (SVGA), an Extended Video Graphics Array (XVGA), and an S-video interface and so on. A memory card 340 can be inserted into the data reading interface device 320, and reads the data stored in the memory card 340, and then transmits the data of the memory card 340 to the display device 110 of the portable display 100 through the linkage between the data transmission port 330 and the portable device 100, and finally develops it into image.

It can be seen from the above description that the design of the portable display of the present invention is a new utility model, a common middle level user can first buy a digital camera typically without a display device in case there is not that much budget, and later buy an externally connected camera display monitor as desired, so do the user who has bought a camera without a display monitor earlier. Besides, a high level user can mount the portable display or detach it depending on the operation requirement. Thus, it is suitable for various users.

Moreover, the portable display of the present invention further comprises an electronic data reading device, which is primarily used to read the data stored in the memory card, and directly display the data of the memory card of the user, such as photos, onto the portable display through the linked portable display.

In the present invention, the advantages according to the different embodiments include:

According to the portable display disclosed in the present invention, the display is in communication with the electronic device that is used to process the digital image data in an externally connected manner, and can be detached or mounted at any moment to facilitate the user's use.

The display device of the present invention can be rotated at any angle within 360 degrees, and can be rotated at a specific position angle.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A portable display, including:
a display device for displaying a video signal;
a connecting base, disposed on one side of the display device; and
a rotating connectible base, which is placed in the connecting base to rotate the display device at any angle coaxially, the rotating connectible base comprising:
a connection, for data delivering and linking between the display device and the electronic device; and
a rotation stopper connected to the connection, which slides in the connecting base, and provides a radial force against the connecting base.

2. The portable display according to Claim 1, wherein the rotation stopper comprises more than one elastic element and a holder, the holder passing through the connection, and the elastic element being placed in the accommodating space between the holder and the connection, and part of the elastic elements projecting from the holder.

3. The portable display according to Claim 2, wherein an orifice is set on the holder, and part of the elastic element passes through the orifice to project from the holder.

4. The portable display according to Claim 2, wherein the elastic element is a sheet like elastic slice.

5. The portable display according to Claim 2, wherein an aperture is set on one side of the holder, and a slot is set within the holder, the slot being connecting to the edge of the aperture, and the aperture matching the shape of the connection.

6. The portable display according to Claim 1, wherein more than one groove is set on one end of the connecting base, and the connecting base is stopped by being against the grooves when rotating.

7. The portable display according to Claim 1, further comprising a pivot cover, which is connected to the connecting base and passes through the connection.

8. The portable display according to Claim 1, wherein the connection connects a Flexible Print Circuit Board, which is connected to the display device and transmits the signal transmitted to the connection to the display device through the Flexible Print Circuit Board.

9. The portable display according to Claim 1, wherein the connection is suitable for one of those selected from the group consisting of an Universal Serial Bus (USB) interface, an IEEE1394 interface, a Digital Video Interface (DVI), a Video Graphics Array (VGA), a Super Video Graphics Array (SVGA), an Extended Video Graphics Array (XVGA), and an S-video interface.

10. The portable display according to Claim 1, further comprising an electronic data reading device, which comprises a base body, a data reading interface device and a data transmission port disposed within the base body, wherein the rotating connectible base of the display device is connected to the data transmission port of the data reading device, and the display device further converts a data image transmitted by the electronic data reading device into a visible image information.

11. The portable display according to Claim 10, wherein the data transmission port of the electronic data reading device is suitable for one of those selected from the group consisting of an Universal Serial Bus (USB) interface, an IEEE 1394 interface, a Digital Video Interface (DVI), a Video Graphics Array (VGA), a Super Video Graphics Array (SVGA), an Extended Video Graphics Array (XVGA), and an S-video interface.
